# EUROPÄISCHE PATENTSCHRIFT

(11) **EP 1 266 785 B1**
(45) Veröffentlichungstag und Bekanntmachung des Hinweises auf die Patenterteilung: **15.03.2006**
(21) Anmeldenummer: 02011359.3
(22) Anmeldetag: 23.05.2002
(51) Int. Cl.: B60K 15/077

(54) **Einrichtung zur Verminderung eines Schwappens von Kraftstoff in einem Kraftstoffbehälter**
Anti-slosh device in fuel tank
Dispositif anti-ballottement dans un réservoir à carburant

(30) Priorität: 12.06.2001 DE 10128308
(43) Veröffentlichungstag der Anmeldung: 18.12.2002
(73) Patentinhaber: SIEMENS AKTIENGESELLSCHAFT, 80333 München (DE)
(72) Erfinder: Krogull, Christian, 45899 Gelsenkirchen (DE)

(56) Entgegenhaltungen:
- EP-A- 0 597 581
- EP-A- 0 799 739
- DE-A- 10 008 567
- DE-U- 9 102 920
- US-A- 4 974 743

## Beschreibung

Die Erfindung betrifft eine Einrichtung zur Verminderung eines Schwappens von Kraftstoff in einem Kraftstoffbehälter eines Kraftfahrzeuges mit zumindest einem Schwapphemmelement, wobei das Schwapphemmelement als getrennt von dem Kraftstoffbehälter zu fertigendes und durch eine Montageöffnung des Kraftstoffbehälters montierbares Bauteil gestaltet ist.

Eine solche Einrichtung wird in heutigen Kraftfahrzeugen häufig eingesetzt und ist aus der Praxis bekannt. Meist sind mehrere Schwapphemmelemente einstückig mit dem Boden des Kraftstoffbehälters gefertigt oder mit diesem verschweißt und bremsen beispielsweise bei Kurvenfahrten des Kraftfahrzeuges die Geschwindigkeit des hin und her strömenden Kraftstoffs.

Nachteilig bei der bekannten Einrichtung ist, dass für die einstückige Fertigung des Kraftstoffbehälters mit dem Schwapphemmelement ein aufwändig gestaltetes Werkzeug erforderlich ist. Beispielsweise sind für in dem Schwapphemmelement anzuordnende Ausnehmungen Schieber und Kerne der Werkzeugform erforderlich- Dies führt zu einer besonders kostenintensiven Fertigung der Einrichtung.

Aus der EP 0 799 739 A1 ist eine gattungebildende Einrichtung mit einem Kraftstoffbehälter bekannt, bei dem Schwallwandeinsätze von den Stirnseiten in den Kraftstoffbehälter eingesetzt werden können. Die Stirnseiten werden anschließend von Deckeln dichtend verschlossen. Hierdurch lassen sich jedoch nur rohrförmige Kraftstoffbehälter herstellen. Weiterhin gestaltet sich die Fertigung des Kraftstoffbehälters sehr aufwändig, weil der Deckel durch die aufwändige Abdichtung der sehr langen Dichtfugen sehr schwierig zu fertigen ist.

Der Erfindung liegt das Problem zugrunde, eine Einrichtung der eingangs genannten Art so zu gestalten, dass sie besonders einfach herstellbar ist.

Dieses Problem wird erfindungsgemäß dadurch gelöst, dass die Abmessungen des Schwapphemmelementes in Betriebsstellung größer als die Abmessungen der Montageöffnung sind.

Durch diese Gestaltung kann der Kraftstoffbehälter besonders einfach im Blasverfahren, im Tiefziehverfahren oder im Spritzgussverfahren aus einfach aufgebauten Formteilen hergestellt werden. Hierdurch lässt sich die erfindungsgemäße Einrichtung besonders kostengünstig fertigen. Da die Montageöffnung meist ohnehin zur Montage einer Fördereinheit vorhanden ist, wird ein zusätzlicher konstruktiver Aufwand am Kraftstoffbehälter durch die nachträgliche Montage des Schwapphemmelements vermieden.

Die Montageöffnung kann gemäß einer vorteilhaften Weiterbildung der Erfindung für die Montage des Schwapphemmelementes besonders klein gestaltet werden, wenn das Schwapphemmelement von einer Montagestellung mit kleinen Abmessungen in die Betriebsstellung mit im Verhältnis zur Montagestellung großen Abmessungen bewegbar ist. Die geringen Abmessungen der Montageöffnung führen zur Begrenzung von Kraftstoffemissionen durch Dichtungen eines die Montageöffnung verschließenden Flansches. Ebenfalls tragen die geringen Abmessungen der Montageöffnung zu einem besonders geringen baulichen Aufwand des Kraftstoffbehälters bei.

Die Halterung des Schwapphemmelementes innerhalb des Kraftstoffbehälters erfordert gemäß einer anderen vorteilhaften Weiterbildung der Erfindung einen besonders geringen baulichen Aufwand, wenn das Schwapphemmelement an einem die Montageöffnung des Kraftstoffbehälters verschließenden Flansch befestigt ist.

Das Schwapphemmelement könnte beispielsweise in dem Kraftstoffbehälter verklebt oder verschweißt werden. Die Montage des Schwapphemmelementes gestaltet sich jedoch gemäß einer anderen vorteilhaften Weiterbildung der Erfindung besonders einfach, wenn das Schwapphemmelement und die Wandung des Kraftstoffbehälters miteinander korrespondierende Rastmittel aufweisen.

Das im Kraftstoffbehälter montierte Schwapphemmelement weist gemäß einer anderen vorteilhaften Weiterbildung der Erfindung eine besonders hohe Stabilität auf, wenn es Stabilisierungsteile und/oder Befestigungsteile zur Halterung zumindest eines Schwapphemmteils hat.

Das Schwapphemmelement wird gemäß einer anderen vorteilhaften Weiterbildung der Erfindung zuverlässig in die vorgesehene Lage im Kraftstoffbehälter bewegt, wenn das Schwapphemmteil aus einem Formgedächtnismaterial gefertigt ist.

Zur weiteren Verringerung der Fertigungskosten der erfindungsgemäßen Einrichtung trägt es bei, wenn das Schwapphemmelement in die Montagestellung vorgespannt ist.

Das Schwapphemmelement kann gemäß einer vorteilhaften Weiterbildung der Erfindung in Montagestellung besondere geringe Abmessungen aufweisen, wenn das Schwapphemmteil aus einem elastischen Material gefertigt ist.

Das Schwapphemmelement gestaltet sich gemäß einer anderen vorteilhaften Weiterbildung der Erfindung in Montagestellung besonders kompakt, wenn es aufrollbar gestaltet ist.

Zur weiteren Verringerung der Fertigungskosten des Schwapphemmelements trägt es gemäß einer anderen vorteilhaften Weiterbildung bei, wenn das Schwapphemmteil an dem Befestigungsteil schwenkbar gelagert ist.

Die Bewegung des Schwapphemmelementes in die vorgesehenen Stellungen könnte beispielsweise mit einem Zugmechanismus oder einer Hebeleinrichtung erfolgen. Die Bewegung des Schwapphemmelementes erfordert jedoch einen besonders geringen konstruktiven Aufwand, wenn das Befestigungsteil ein Führungselement zur Bewegung des Schwapphemmteils von der Montagestellung in die Betriebsstellung hat.

Das Schwapphemmelement wird gemäß einer anderen vorteilhaften Weiterbildung der Erfindung durch ein Federelement zur vorspannung des Schwapphemmelementes gegen den Boden des Kraftstoffbehälters besonders zuverlässig in dem Kraftstoffbehälter gehalten.

Das Stabilisferungeelentent gestaltet sich gemäß einer anderen vorteilhaften Weiterbildung der Erfindung besonders kompakt, wenn das Befestigungsteil teleskopartig verstellbar ist und ein Federelement aufweist.

Ein geringes Gewicht des Schwapphemmelementes lässt sich gemäß einer anderen vorteilhaften Weiterbildung der Erfindung durch mehrere mit einem vorgesehenen Abstand zueinander übereinander angeordnete Schwapphemmteile erreichen.

Ein geringes Gewicht bei gleichzeitig hoher Schwallhemmung lässt sich gemäß einer anderen vorteilhaften Weiterbildung der Erfindung einfach erreichen, wenn das Schwapphemmteil als der Höhe des Kraftstoffbehälters entsprechend breit gestaltetes Band mit darin angeordneten Ausnehmungen gestaltet ist.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: eine schematische Schnittdarstellung einer erfindungsgemäßen Einrichtung bei der Montage,
- Fig.2: eine Schnittdarstellung durch die erfindungsgemäße Einrichtung aus Figur 1 nach der Montage,
- Fig.2a: eine weitere Ausführungsform gemäß Fig. 2
- Fig.3: eine schematische Schnittdarstellung durch eine weitere Ausführungsform der erfindungsgemäßen Einrichtung,
- Fig.4: ein Schwapphemmelement der erfindungsgemäßen Einrichtung aus Figur 3 vor der Montage,
- Fig.5: ein Schwapphemmelement einer weiteren Ausführungsform der erfindungsgemäßen Einrichtung.

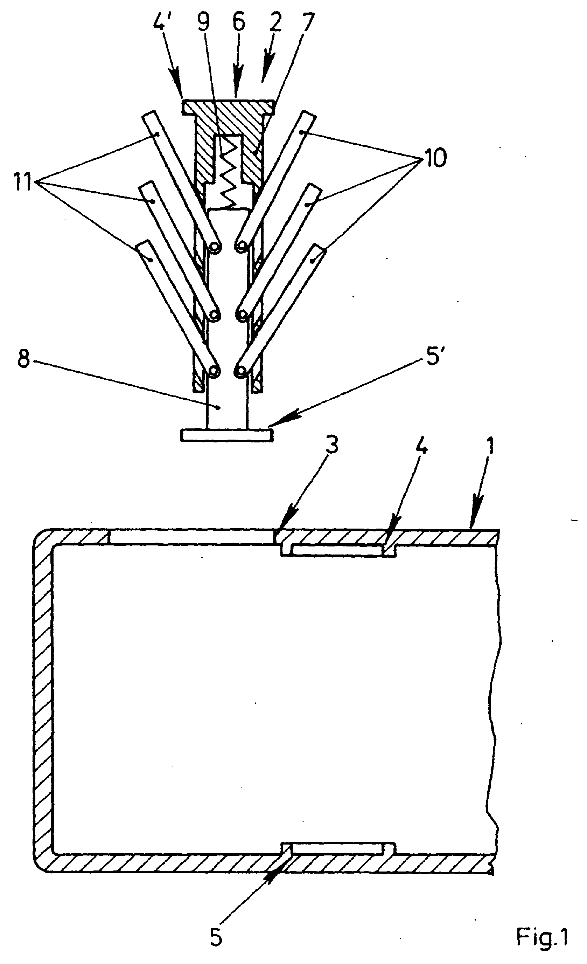

Figur 1 zeigt eine Einrichtung zur Verminderung eines Schwappens von Kraftstoff in einem Kraftstoffbehälter 1 mit einem Schwapphemmelement 2 vor der Montage. Der Kraftstoffbehälter 1 hat eine Montageöffnung 3 und an seiner oberen und unteren Wandung jeweils Rastmittel 4, 5. Die Rastmittel 4, 5 korrespondieren mit den an den Enden eines Befestigungsteils 6 des Schwapphemmelementes 2 angeordneten Rastmitteln 4', 5'. Das Befestigungsteil 6 weist zwei teleskopartig ineinander verschiebbare Hülsen 7, 8 auf. Die Hülsen 7, 8 sind mittels eines Federelementes 9 voneinander weg vorgespannt. An einer der Hülsen 8 sind mehrere Schwapphemmteile 10 schwenkbar gelagert. Die andere Hülse 7 weist Führungselemente 11 zur Bewegung der Schwapphemmteile 10 beim Ineinanderverschieben der Hülsen 7, 8 auf. In der eingezeichneten Stellung sind die Schwapphemmteile 10 an eine der Hülsen 7 geklappt. Hierdurch lässt sich das Schwapphemmelement 2 durch die Montageöffnung 3 in den Kraftstoffbehälter 1 einführen.

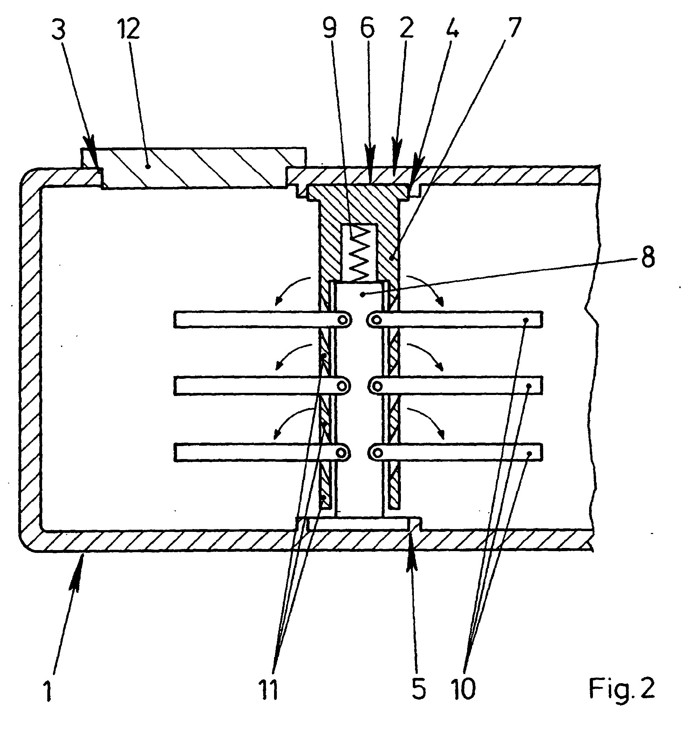

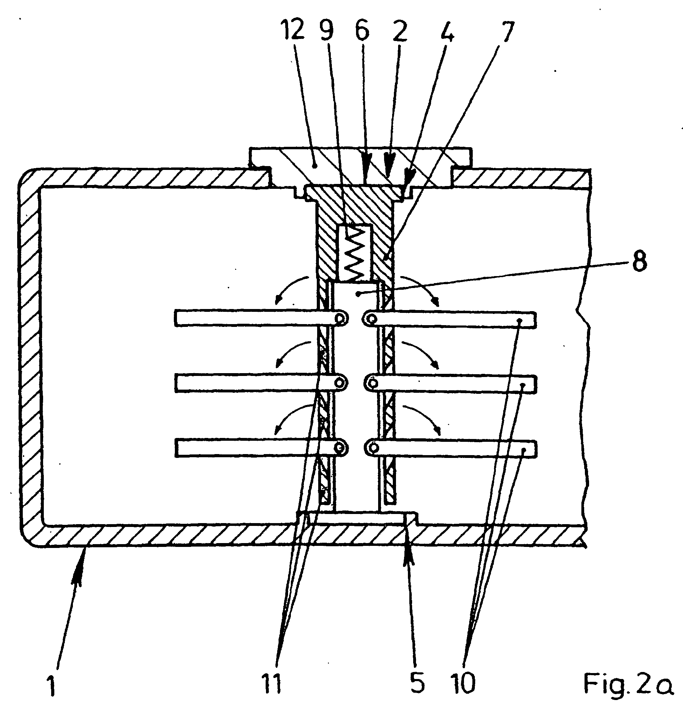

Figur 2 zeigt die Einrichtung aus Figur 1 in der in dem Kraftstoffbehälter 1 eingefügten Stellung. Die Hülsen 7, 8 des Befestigungsteils 6 sind gegen die Kraft des Federelementes 9 zusammengedrückt. Die Schwapphemmteile 10 sind dabei in eine zu dem Befestigungsteil 6 rechtwinklige Lage geklappt. Hin und her schwappender Kraftstoff wird von den Schwapphemmteilen 10 gebremst. Die Montageöffnung 3 ist mit einem Flansch 12 verschlossen.

Figur 2a zeigt die Einrichtung aus Fig. 1, wobei das Schwapphemmelement 2 am Flansch 12 angeordnet ist.

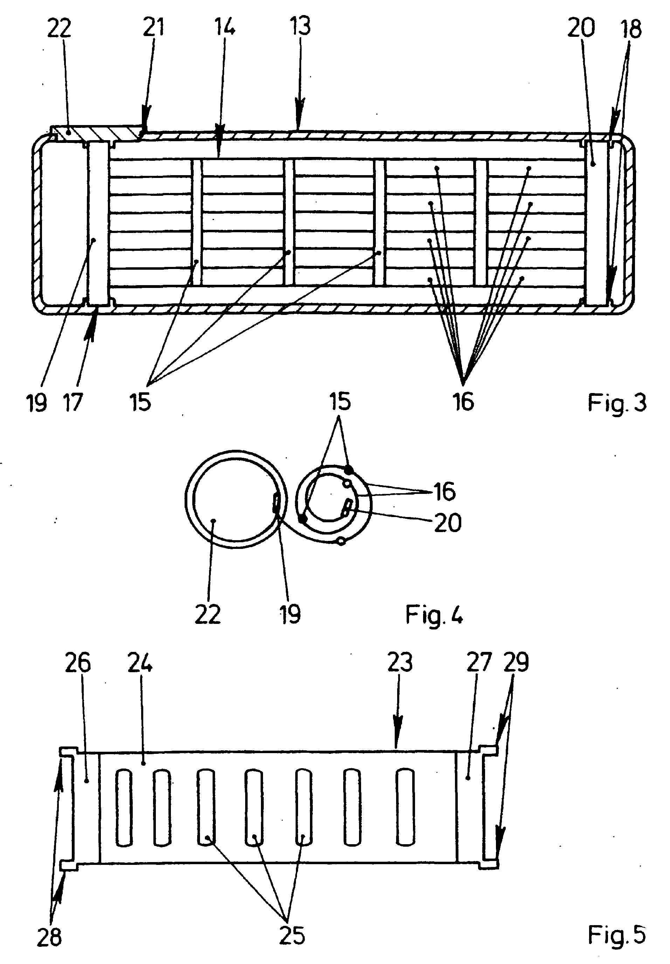

Figur 3 zeigt schematisch eine Schnittdarstellung durch eine weitere Ausführungsform der Einrichtung mit einem in einem Kraftstoffbehälter 13 montierten Schwapphemmelement 14. Das Schwapphemmelement 14 hat mehrere übereinander angeordnete und über Stabilisierungsteile 15 miteinander verbundene Schwapphemmteile 16. Rastmittel 17 sind jeweils an den Enden der an dem Schwapphemmelement 14 angeordneten Befestigungsteile 19, 20 angeordnet. Eines der Befestigungsteile 19 ist an einem in einer Montageöffnung 21 montierten Flansch 22 befestigt.

Figur 4 zeigt das Schwapphemmelement 14 aus Figur 3 vor der Montage in einer Draufsicht. Hierbei ist zu erkennen, dass die Schwapphemmteile 16 aus einem elastischen Material gefertigt sind. Das Schwapphemmelement 14 lässt sich daher im zusammengerollten Zustand durch die in Figur 3 dargestellte Montageöffnung 21 in dem Kraftstoffbehälter 13 montieren.

Figur 5 zeigt ein Schwapphemmelement 23 zur Montage in dem in Figur 3 dargestellten Kraftstoffbehälter 13 mit einem bandförmigen Schwapphemmteil 24. Das Schwapphemmteil 24 ist aus einem Material mit einem Formgedächtnis gefertigt und weist mehrere Ausnehmungen 25 auf. An den Enden sind Befestigungsteile 26, 27 mit Rastmitteln 28, 29 angeordnet. Dieses Schwapphemmelement 23 lässt sich daher wie das aus Figur 4 bei der Montage aufrollen und durch die Montageöffnung 21 in den Kraftstoffbehälter 13 einführen. Innerhalb des Kraftstoffbehälters 13 bewegt sich das Schwapphemmelement 23 selbstständig in die vorgesehene Lage.

## Patentansprüche

1. Einrichtung zur Verminderung eines Schwappens von Kraftstoff in einem Kraftstoffbehälter (1) eines Kraftfahrzeuges mit zumindest einem Schwapphemmelement (2,14,23), wobei das Schwapphemmelement als getrennt von dem Kraftstoffbehälter zu fertigendes und durch eine Montageöffnung des Kraftstoffbehälters montierbares Bauteil gestaltet ist, **dadurch gekennzeichnet, dass** die Abmessungen des Schwapphemmelementes (2, 14, 23) in Betriebsstellung größer als die Abmessungen der Montageöffnung (3, 21) sind.

2. Einrichtung nach Anspruch 1, **dadurch gekennzeichnet, dass** das Schwapphemmelement (2, 14, 23) von einer Montagestellung mit kleinen Abmessungen in die Betriebsstellung mit im Verhältnis zur Montagestellung großen Abmessungen bewegbar ist.

3. Einrichtung nach Anspruch 1 oder 2, **dadurch gekennzeichnet, dass** das Schwapphemmelement (14) an einem die Montageöffnung (21) des Kraftstoffbehälters (13) verschließenden Flansch (22) befestigt ist.

4. Einrichtung nach zumindest einem der vorhergehenden Ansprüche, **dadurch gekennzeichnet, dass** das Schwapphemmelement (2, 14, 23) und die Wandung des Kraftstoffbehälters (1, 13) miteinander korrespondierende Rastmittel (4, 5, 17, 18, 28, 29) aufweisen.

5. Einrichtung nach zumindest einem der vorhergehenden Ansprüche, **dadurch gekennzeichnet, dass** das Schwapphemmelement (14) ein Stabilisierungsteil (15) und/oder ein Befestigungsteil (6, 19, 20, 26, 27) zur Halterung zumindest eines Schwapphemmteils (10, 16, 24) hat.

6. Einrichtung nach zumindest einem der vorhergehenden Ansprüche, **dadurch gekennzeichnet, dass** das Schwapphemmteil (24) aus einem Material mit einem Formgedächtnis gefertigt ist.

7. Einrichtung nach zumindest einem der vorhergehenden Ansprüche, **dadurch gekennzeichnet, dass** das Schwapphemmelement (2, 14, 23) in die Montagestellung vorgespannt ist.

8. Einrichtung nach zumindest einem der vorhergehenden Ansprüche, **dadurch gekennzeichnet, dass** das Schwapphemmteil (10, 16, 24) aus einem elastischen Material gefertigt ist.

9. Einrichtung nach zumindest einem der vorhergehenden Ansprüche, **dadurch gekennzeichnet, dass** das Schwapphemmelement (14, 23) aufrollbar gestaltet ist.

10. Einrichtung nach zumindest einem der vorhergehenden Ansprüche, **dadurch gekennzeichnet, dass** das Schwapphemmteil (10) an dem Befestigungsteil (6) schwenkbar gelagert ist.

11. Einrichtung nach zumindest einem der vorhergehenden Ansprüche, **dadurch gekennzeichnet, dass** das Befestigungsteil (6) ein Führungselement (11) zur Bewegung des Schwapphemmteils (10) von der Montagestellung in die Betriebsstellung hat.

12. Einrichtung nach zumindest einem der vorhergehenden Ansprüche, **gekennzeichnet durch** ein Federelement (9) zur Vorspannung des Schwapphemmelementes (2) gegen den Boden des Kraftstoffbehälters (1).

13. Einrichtung nach zumindest einem der vorhergehenden Ansprüche, **dadurch gekennzeichnet, dass** das Befestigungsteil (6) teleskopartig verstellbar ist und ein Federelement (9) aufweist.

14. Einrichtung nach zumindest einem der vorhergehenden Ansprüche, **gekennzeichnet durch** mehrere mit einem vorgesehenen Abstand zueinander übereinander angeordnete Schwapphemmteile (10, 16).

15. Einrichtung nach zumindest einem der vorhergehenden Ansprüche, **dadurch gekennzeichnet, dass** das Schwapphemmteil (24) als der Höhe des Kraftstoffbehälters (13) entsprechend breit gestaltetes Band mit darin angeordneten Ausnehmungen (25) gestaltet ist.

## Claims

1. Device for reducing sloshing of fuel in a fuel tank (1) of a motor vehicle, having at least one slosh-inhibiting element (2, 14, 23), the slosh-inhibiting element being designed as a component which is to be manufactured separately from the fuel tank and can be fitted through an installation opening of the fuel tank, **characterized in that** the dimensions of the slosh-inhibiting element (2, 14, 23) in the operational position are larger than the dimensions of the installation opening (3, 21).

2. Device according to Claim 1, **characterized in that** the slosh-inhibiting element (2, 14, 23) can be moved from an installation position of small dimensions into the operational position of large dimensions in relation to the installation position.

3. Device according to Claim 1 or 2, **characterized in that** the slosh-inhibiting element (14) is fastened to a flange (22) closing the installation opening (21) of the fuel tank (13).

4. Device according to at least one of the preceding claims, **characterized in that** the slosh-inhibiting element (2, 14, 23) and the wall of the fuel tank (1, 13) have latching means (4, 5, 17, 18, 28, 29) which correspond to one another.

5. Device according to at least one of the preceding claims, **characterized in that** the slosh-inhibiting element (14) has a stabilizing part (15) and/or a fastening part (6, 19, 20, 26, 27) for the securing of at least one slosh-inhibiting part (10, 16, 24).

6. Device according to at least one of the preceding claims, **characterized in that** the slosh-inhibiting part (24) is manufactured from a material having a shape memory.

7. Device according to at least one of the preceding claims, **characterized in that** the slosh-inhibiting element (2, 14, 23) is prestressed into the installation position.

8. Device according to at least one of the preceding claims, **characterized in that** the slosh-inhibiting part (10, 16, 24) is manufactured from an elastic material.

9. Device according to at least one of the preceding claims, **characterized in that** the slosh-inhibiting element (14, 23) is designed such that it can be rolled up.

10. Device according to at least one of the preceding claims, **characterized in that** the slosh-inhibiting part (10) is mounted pivotably on the fastening part (6).

11. Device according to at least one of the preceding claims, **characterized in that** the fastening part (6) has a guide element (11) for moving the slosh-inhibiting part (10) from the installation position into the operational position.

12. Device according to at least one of the preceding claims, **characterized by** a spring element (9) for prestressing the slosh-inhibiting element (2) against the bottom of the fuel tank (1).

13. Device according to at least one of the preceding claims, **characterized in that** the fastening part (6) can be adjusted telescopically and has a spring element (9).

14. Device according to at least one of the preceding claims, **characterized by** a plurality of slosh-inhibiting parts (10, 16) which are arranged one above another at a designated distance from one another.

15. Device according to at least one of the preceding claims, **characterized in that** the slosh-inhibiting part (24) is designed as a band of wide design corresponding to the height of the fuel tank (13) with recesses (25) arranged therein.

## Revendications

1. Dispositif destiné à diminuer le ballottement du carburant dans un réservoir à carburant (1) de véhicule automobile et comportant au moins un élément antiballottement (2, 14, 23), où l'élément antiballottement est conçu comme constituant à fabriquer séparément du réservoir à carburant et à installer à travers un regard de montage du réservoir à carburant, **caractérisé par le fait que** les dimensions de l'élément antiballottement (2, 14, 23) sont, dans sa position de service, plus importantes que les dimensions du regard de montage (3, 21).

2. Dispositif selon la revendication 1 **caractérisé par le fait que** l'élément antiballottement (2, 14, 23) peut être déplacé d'une position de montage ayant de petites dimensions dans une position de service ayant, par rapport aux dimensions de la position de montage, des dimensions importantes.

3. Dispositif selon la revendication 1 ou 2 **caractérisé par le fait que** l'élément antiballottement (14) est fixé à une flasque (22) fermant le regard de montage (21) du réservoir à carburant (13).

4. Dispositif selon au moins l'une des revendications précédentes **caractérisé par le fait que** l'élément antiballottement (2, 14, 23) et la paroi du réservoir à carburant (1, 13) comportent des moyens d'encliquetage (4, 5, 17, 18, 28, 29) correspondant les uns aux autres.

5. Dispositif selon au moins l'une des revendications précédentes **caractérisé par le fait que** l'élément antiballottement (14) a une pièce stabilisante (15) et / ou une pièce de fixation (6, 19, 20, 26, 27) destinée à maintenir au moins une partie antiballottement (10, 16, 24).

6. Dispositif selon au moins l'une des revendications précédentes **caractérisé par le fait que** la partie antiballottement (24) est fabriquée en matériau à mémoire de forme.

7. Dispositif selon au moins l'une des revendications précédentes **caractérisé par le fait que** l'élément antiballottement (2, 14, 23) est soumis à une précontrainte dans sa position de montage.

8. Dispositif selon au moins l'une des revendications précédentes **caractérisé par le fait que** la partie antiballottement (10, 16, 24) est fabriqué en matériau élastique.

9. Dispositif selon au moins l'une des revendications précédentes **caractérisé par le fait que** l'élément antiballottement (14, 23) peut être déroulé.

10. Dispositif selon au moins l'une des revendications précédentes **caractérisé par le fait que** la partie antiballottement (10) est montée en pivotement sur la partie fixation (6).

11. Dispositif selon au moins l'une des revendications précédentes **caractérisé par le fait que** la partie fixation (6) a un élément guide (11) permettant de manoeuvrer la partie antiballottement (10) de la position de montage dans la position de service.

12. Dispositif selon au moins l'une des revendications précédentes **caractérisé par** un élément ressort (9) destiné à soumettre l'élément antiballottement (2) à une précontrainte contre le fond du réservoir à carburant (1).

13. Dispositif selon au moins l'une des revendications précédentes **caractérisé par le fait que** la partie fixation (6) est modifiable d'une façon télescopique et comporte un élément ressort (9).

14. Dispositif selon au moins l'une des revendications précédentes **caractérisé par** plusieurs parties antiballottement (10, 16) disposées l'une au-dessus de l'autre avec un écart donné entre elles.

15. Dispositif selon au moins l'une des revendications précédentes **caractérisé par le fait que** la partie antiballottement (24) est conçue sous la forme d'une bande, dont la largeur correspond à la hauteur du réservoir à carburant (13) et qui comporte des évidements (25) qui y sont ménagés.
